# EUROPEAN PATENT SPECIFICATION

(11) **EP 1 027 701 B1**
(45) Date of publication and mention of the grant of the patent: **09.06.2004**
(21) Application number: 98952991.2
(22) Date of filing: 05.11.1998
(51) Int. Cl.: G11B 7/09, G11B 7/24

(54) **FOCUS ERROR CORRECTION APPARATUS**
FOKUSFEHLERKORREKTURGERÄT
APPAREIL DE CORRECTION D'ERREURS DE FOCALISATION

(30) Priority: 05.11.1997 US 64298 P; 05.11.1997 US 64302 P
(43) Date of publication of application: 16.08.2000
(73) Proprietor: OMD Devices LLC, Wilmington, DE 19805 (US)
(72) Inventor: ORBACH, Zeev, 78483 Ashkelon (IL); GLUSHKO, Boris, 77516 Asiidod (IL)
(74) Representative: Thomson, Paul Anthony
(86) International application number: PCT/IL1998/000538
(87) International publication number: WO 1999/023647

(56) References cited:
- EP-A- 0 354 601
- DE-A- 4 444 988
- US-A- 4 090 031

## Description

### FIELD OF THE INVENTION

This invention is in the field of optical reading techniques, and relates to a focus error correction apparatus used with a reading system for reading in high-density optical data storage devices, such as compact discs (CDs), tapes, cards, or the like.

### BACKGROUND OF THE INVENTION

Two-dimensional optical memory devices are known and widely used as high-density and high-capacity storage medium. They typically comprise one information-carrying layer formed with a pit-like pattern.

Three-dimensional optical memory devices have been developed for significantly increasing the amount of recorded data, in comparison to that of two-dimensional devices. The capacity of a three-dimensional optical memory device is proportional to the third order of a reading radiation wavelength. For example, the total thickness of a three-dimensional optical memory device can be of 1mm, and can be formed of information layers having a thickness of 0.01mm. The storage capacity of such a device is 100 times greater than the capacity of a single layer.

A three-dimensional optical memory device is disclosed, for example, in U.S. Patent No. 4,090,031. The device comprises a substrate and a plurality of data layers provided on one side of the substrate. Each of the data layers comprises data tracks formed of lines of data spots. In this device, similar to the conventional two-dimensional one, information carrying pit-like regions, as well as the adjacent regions of the layers, are light reflective. Consequently, conventional reading techniques are based on interference/reflectivity physical principles. In order to select one data layer for playback, the focus of a reading light beam is changed from one data layer to another utilizing a focus error correction technique, which typically employs control electronics and a servo motor for driving an objective lens.

One example of a focus-error correction apparatus used in a reading system for reading a radiation-reflecting record carrier is disclosed, in U.S. Patent No. 4,123,652. Here, the focus error detection is based on the use of astigmatic optics. However, since the data layers are substantially reflective, an unavoidable multiple reflection occurs, which impedes the reading in such a "reflective" information carrier having more than two data layers.

Three-dimensional optical memory devices based on fluorescent data regions, rather than reflective, are disclosed in U.S. Patent Applications Nos. 08/956,052 and 08/944,402 assigned to the assignee of the present application. Unfortunately, the conventional focus-error correction techniques used for reading in the "reflective" information carrier are not effective for a three-dimensional "fluorescent" information carrier.

EP-A-0354601 discloses a focus error correction process based on the astigmatism method for use with a single layer data carrier wherein the recording medium has islands of light emitting material in regions formed between a transparent substrate, and a reflective layer disposed on one principal surface thereof.

### SUMMARY OF THE INVENTION

There is accordingly a need in the art to improve the conventional focus-error correction techniques by providing a novel focus-error correction apparatus to be used with a reading system for reading in a three-dimensional information carrier.

To solve this object the present invention provides a focus error correction apparatus as specified in claim 1.

### BRIEF DESCRIPTION OF THE DRAWINGS:

In order to understand the invention and to see how it may be carried out in practice, a preferred embodiment will now be described, by way of non-limiting example only, with reference to the accompanying drawings, in which:
**Fig. 1** is a block diagram illustrating the main components of a focus error correction apparatus according to one embodiment of the invention, associated with an information carrier constructed according to one example of the invention;
**Figs. 2a and 2b** show the main principles underlying the implementation of the information carrier of Fig. 1;
**Figs. 3a to 3d** illustrate the main principles of a focus error detection technique utilized in the apparatus of Fig. 1;
**Figs. 4a and 4**b illustrate the principles of the focus error detection technique applied to the carrier shown in Figs. 2a and 2b, as compared to the conventional "reflective" information carrier;
**Figs 5 and 6** illustrate two more embodiments of a focus error correction apparatus according to the invention;
**Figs. 7a and 7b** illustrate the main principles of a focus error correction technique according to yet another embodiment of the invention;
**Fig. 8** schematically illustrates another example of an information carrier; and
**Fig. 9** is a block diagram of a reading system suitable for reading in the information carrier of Fig. 8, utilizing a focus error correction technique according to the invention.

### DETAILED DESCRIPTION OF THE PREFERRED EMBODIMENT

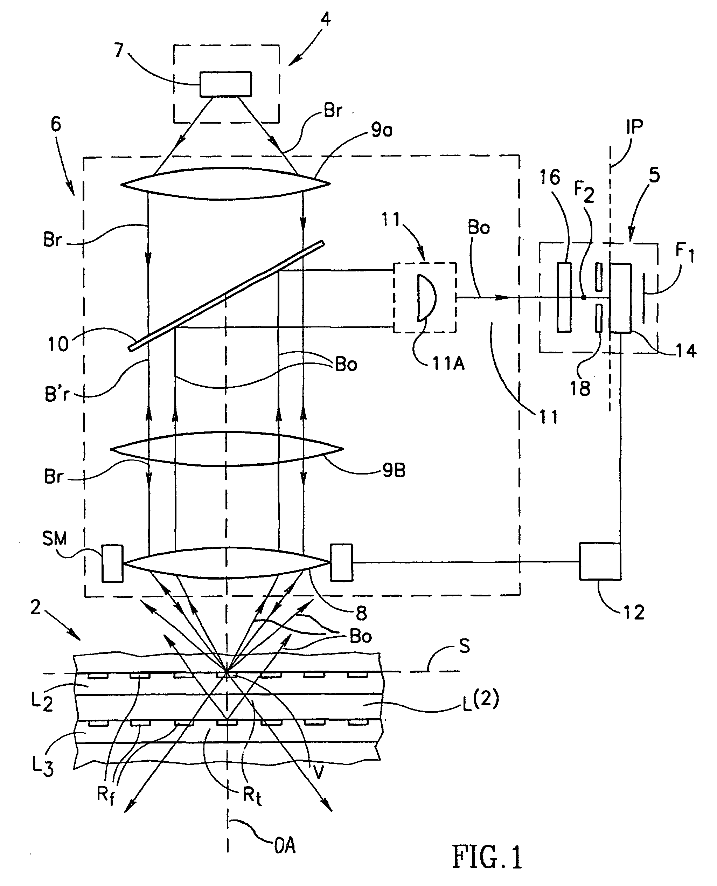

Referring to Fig. 1, there is illustrated a focusing apparatus, generally designated **1**, which is a constructional part of a pickup system (not shown) for reading in an information carrier **2**. The apparatus **1** comprises an illumination unit **4**, a detection unit **5**, radiation directing optics **6** and a control unit **12.**

The illumination unit **4** includes a radiation source **7** that generates a reading beam **B**_{**r**} of a predetermined wavelength **λ**_{**r**}**.** The radiation directing optics **6** typically includes an objective lens **8** or a plurality of such lenses (constituting a focusing optics), an auxiliary lens **9a** and a spherical aberration corrector **9b.** Further provided with the light directing optics **7** are a beam splitter **10** and an imaging optics **11** including a cylindrical lens **11a** (constituting an astigmatic element). The objective lens **8** is supported for sliding movement along its optical axis **OA** towards and away from the carrier **2** by means of an appropriate servomechanism, generally at **SM**. It should be noted, although not specifically shown, that a suitable drive means is provided for driving the rotation of the carrier **2** about its axis, and a reciprocating movement of the carrier with respect to the objective lens **8** so as to effect scanning of the addressed plane inside the carrier.

The reading beam **B**_{**r**} impinges onto the data carrier **2**, illuminating a spot **V** located in a plane **S** inside the carrier **2**, and produces an output radiation **B**_{**o**} of a certain wavelength range **λ**_{**o**}, as will be described specifically further below. The optics **6** directs the incident radiation and returned radiation towards and away from the carrier **2**, respectively. The beam splitter **10** is a dichroic mirror substantially optically transparent for the incident radiation spectrum **λ**_{**r**}**,** and substantially reflective for the output radiation spectrum **λ**_{**0**}**.** In other words, the beam splitter **10** separates the incident and output beams **B**_{**r**} and **B**_{**o**}**,** respectively, and directs the output beam **B**_{**0**} towards the detection unit **5**.

The detection unit **5** comprises a radiation sensitive detector **14** equipped by an optical filter **16**, and is optionally provided with an aperture stop **18.** The aperture stop **18** serves for collecting only a part of the output radiation propagating towards the detector **14**. The filter **16** prevents any radiation component within a spectrum other than that of the output radiation **λ**_{**o**} from reaching the detector **14.** The detector **14** is of a known kind defining a radiation-sensitive surface **IP** for receiving light signals and generating data representative thereof. The electronic unit **12** is interconnected between the servomechanism **SM** and the detector **14**. The control unit is provided with suitable hardware and operated by suitable software so as to be responsive to the data representative of the received light for determining a displacement of the plane **S** from the focal plane of the lens **8** and generating a so-called "focus-error correction signal". This signal operates the mechanism **SM** to move the lens **8** accordingly so as to position its focal plane in the addressed plane **S**.

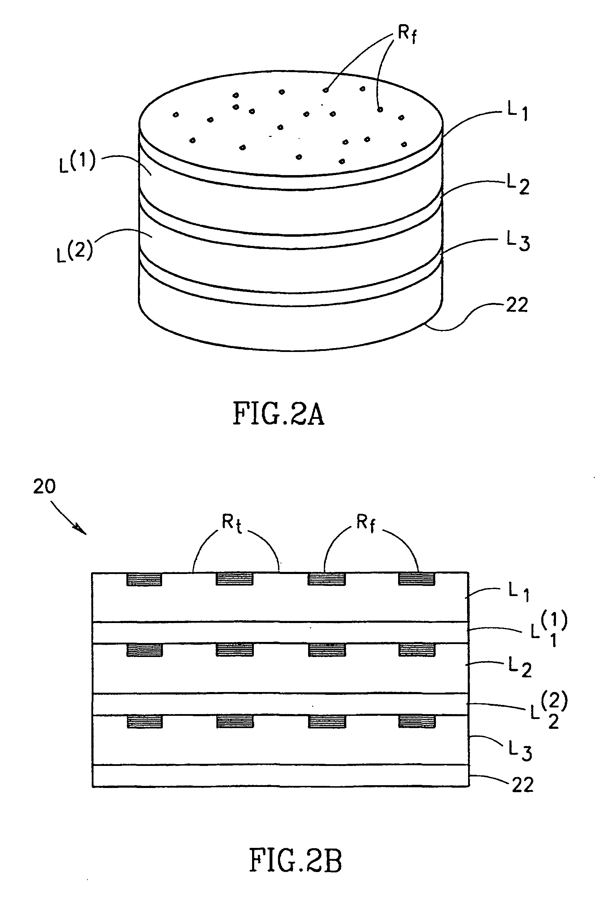

Reference is now made to Figs. 2a and 2b, which illustrate more specifically the construction of the information carrier **2**. The carrier **2** comprises several information layers, for example three layers **L**_{**1**}**, L**_{**2**} and **L**_{**3**}**,** formed on a substrate **22** in a spaced-apart parallel relationship. Each two adjacent information layers are spaced by intermediate layers **L**^{**(1)**} and **L**^{**(2)**}**,** respectively. The substrate **22** and intermediate layers **L**^{**(1)**} and **L**^{**(2)**} are made of an optically transparent material for both the incident radiation **λ**_{**r**} and the output radiation **λ**_{**o**}**.** The information layers **L**_{**1**}**-L**_{**3**} comprise regions or pits, generally at **R**_{**f**}**,** filled with a fluorescent material and surrounded by regions **R**_{**t**} that are made of the same optically transparent material as that of the substrate and intermediate layers. Hence, the regions **R**_{**f**} represent recording fluorescent regions, while the surrounding regions **R**_{**t**} of the information layer, as well as the substrate and intermediate layers, constitute together the optically transparent surrounding regions of the carrier **2**.

Each fluorescent region **R**_{**f**} represents a radiation source emitting an output fluorescent radiation induced by its interaction with an appropriate incident radiation. In order to successfully read-out the recorded information from the information carrier **2**, the following conditions should be satisfied. The recording regions, substantially non-transparent and non-reflective, occupy approximately 10-20% of the total layer area, while the remaining 80-90% of the layer is substantially optically transparent. The absorption of recording regions with respect to the incident reading radiation should preferably be in the range of 5-50%. When reading from such a device, the absorption of the information layer for non-focused reading light is about 1-10%, which is by order of magnitude less than the absorption of the reading light focused on the recording regions. A significant part of the absorbed reading radiation is associated with the recording region located in the focus of the radiation directing optics. A relatively non-significant part of the absorbed reading radiation is associated with a plurality of the recording regions located in the optical path of the reading beam out of focus of the directing optics, this part being distributed over all the recording regions. Hence, the fluorescence of any in-focus recording region is much stronger (about 1000 times) than that of any out-of-focus recording region.

Owing to the fact that the recording regions **R**_{**f**} are constructed as described above and surrounded by the transparent regions **R**_{**t**}**,** there is no strict limitation to the height of the recording regions. This enables the recorded data contained within the carrier to be significantly increased by desirably varying the height of the recording regions. Consequently, this enables making each of the recording regions of a minimum possible length, and therefore making more such regions within each information layer.

The apparatus **1** operates in the following manner. For example, the information is to be currently read from the information layer **L**_{**2**} and, therefore, the reading beam **B**_{**r**} should be focused onto this layer. The propagation of light beams is shown schematically in order to facilitate the illustration. The reading beam **B**_{**r**} passes through the information layer **L**_{**1**} and intermediate layer **L**^{**(1)**}**,** which are, respectively, 80-90% transparent and totally transparent, and successfully impinges onto the desired layer **L**_{**2**} illuminating the spot **V**. The incident radiation **B**_{**r**} is within such a wavelength range **λ**_{**r**} as to excite, when interacting with the recording regions **R**_{**f**}**,** the fluorescence of that specific fluorescent material used in the carrier **2**, producing the excited fluorescent radiation **B**_{**o**}**.**

The objective lens **8** collects light returned from the carrier **2** and directs it to the dichroic mirror **10**. The collected light is composed of the output fluorescence **B**_{**o**} excited in all recording regions located in the optical path of the incident beam **B**_{**r**}, i.e. before-, in- and after the addressed layer, and a relatively small light component **B'**_{**r**} that may be reflected from the surrounding regions **R**_{**t**}**.** The dichroic mirror **10** reflects the fluorescent radiation **B**_{**o**}, which is thus delivered to the detection unit **5**, and transmits the reflected light component **B'**_{**r**} away from the detection unit **5**. Some of the fluorescence **B**_{**o**} reaching the detection unit **5** is rejected by the aperture stop **18**, while some of the non-fluorescent radiation, which may propagate towards the detection unit **5**, is rejected by the filter **16.**

As indicated above, the recording region **R**_{**f**} represents a fluorescent radiation source. Therefore, fluorescent signals detected by the detector **14** do not depend on the optical path of the incident radiation, and rather depend only on the distance between the plane **S** (addressed layer **L**_{**2**}) and the objective lens **8**.

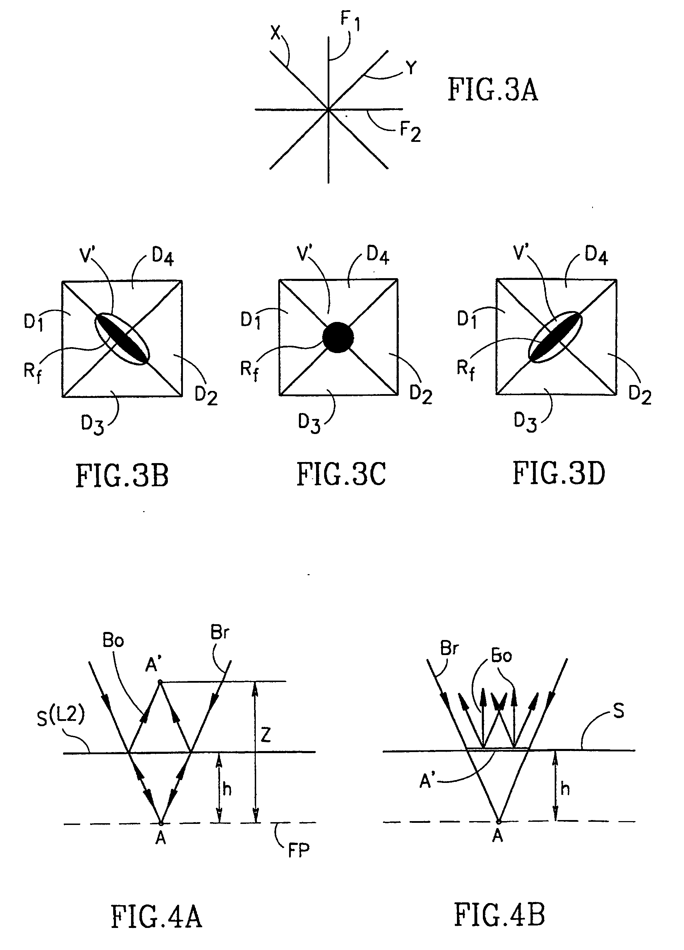

It is known that an astigmatic element typically has two focal lines which, being viewed in an axial direction, occupy different positions and are perpendicular to each other. Thus, the objective lens **8** and cylindrical lens **11** add two focal lines **F**_{**1**} and **F**_{**2**} to the read spot **V**. The relationship between the lines **F**_{**1**} and **F**_{**2**} and the **X-Y** coordinate system is clearly illustrated in Fig. 3a. When the distance ***d*** between the illuminated layer **L**_{**2**} and the objective lens **8** is shorter than the lens focus ***f*** (i.e. *d<f*), the dimensions of the spot **V** become larger than the dimensions of the region **R**_{**f**}**.** In this case, notwithstanding that the dimensions of the region **R**_{**f**} remain unchanged, the dimensions of the imaged spot **V**' in the imaging plane **IP** defined by the sensing surface of the detector **14** will be increased. When the distance ***d*** between the illuminated layer **L**_{**2**} and objective lens **8** is larger than the lens focus ***f*** (i.e. *d>f*), the illuminated spot size **V** becomes larger than the region **R**_{**f**} size, but oriented differently in comparison to that of the opposite situation. In this case, the position of the fluorescent radiation source is larger than that of the in-focus position, relative to the objective lens **8.** Figs. 3b-3d illustrate three different shapes and orientations of the imaging spot **V',** corresponding respectively to before-, in- and after-focus positions of the addressed layer **L**_{**2**}**.**

In order to determine the focus position relative to the desired layer and to operate the servomechanism **SM** accordingly, the so-called "focusing signal" is determined from the detected fluorescent signal. To this end, the detector **14** is typically a so-called "quadrant-cell" comprising four sub-detectors **D**_{**1**}**, D**_{**2**}**, D**_{**3**} and **D**_{**4**} which are disposed in the individual quadrants of an **X-Y** coordinate system. Each of the sub-detectors is exposed to a corresponding fluorescent component, and generates data representative thereof. The focusing signal is calculated from these data in a conventional manner. A so-called "focus-correction signal" is derived electronically from the focusing signal, and the objective lens **8** is moved accordingly, so as to locate the plane **S** (layer **L**_{**2**}) in the focus of the lens **8**.

Turning now to Figs. 4a and 4b, the focusing signal is proportional to the distance **z** between a point **A**, located in a focal plane **FP** of the lens (not shown), and a source of that detected radiation **A**' which is projected onto the imaging plane **IP.** As shown in Fig. 4a, according to the conventional technique associated with the "reflective" information carrier, such a source of the detected radiation **A'** is an image of the focal point **A** produced in accordance with the known laws of reflection. Hence, the distance *z* is equal to ***2h***, wherein **h** is the distance between the focal point **A** and the addressed layer **L**_{**2**}**.** Fig. 4b shows that according to the present invention, the distance *z* is equal to ***h***. It is evident that owing to the absence of interference and diffraction effects in the information carrier **2**, the focus error correction technique according to the invention has less requirements to the optical arrangement, as compared to that used in the conventional apparatus associated with the "reflective" carrier.

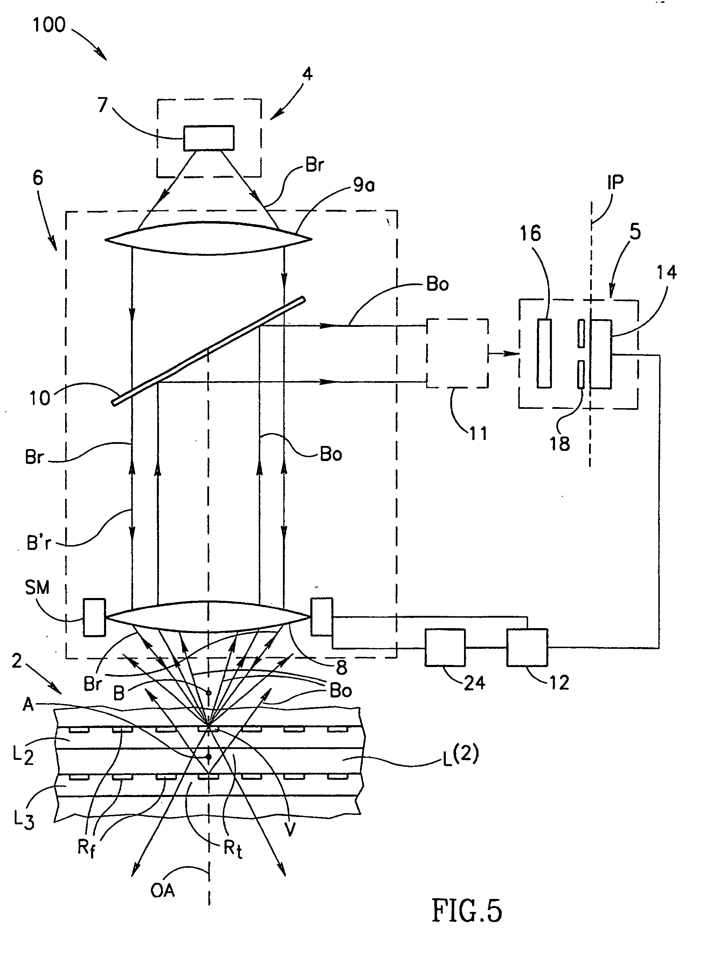

Fig. 5 illustrates a focus error detection apparatus, generally designated **100,** constructed according to another embodiment of the invention. The apparatus **100** is suitable for reading in the information carrier **2**. Those components, which are identical in the devices **1** and **100**, are identified by the same reference numbers in order to facilitate understanding. The astigmatic element **11a** of the apparatus **1** is replaced here by a driver **24** coupled to the servomechanism **SM** for providing a continuous oscillation of the lens **8** along its optical axis **OA.** Obviously, the implementation may be such that the servomechanism carries out the function of the driver **24.**

The illumination unit **4** generates a beam of the incident radiation **B**_{**r**} of a predetermined wavelength **λ**_{**r**}**,** selected to excite the fluorescent material contained in the recording regions **R**_{**f**}**.** The incident beam **B**_{**r**} passes through the light directing optics **6** and impinges onto the carrier **2** producing the output fluorescent radiation **B**_{**o**}**.** Some light component of the incident radiation may be reflected from the surrounding regions **R**_{**t**}**,** resulting in the reflected radiation component **B**_{**r**}**'.** The fluorescent and reflected light components **B**_{**f**} and **B**_{**r**}**'** are collected by the lens **8** and then, respectively, reflected and transmitted by the dichroic mirror **10.**

It is understood that the amount of the collected fluorescent radiation **B**_{**o**} is proportional to the intensity of reading radiation **B**_{**r**} interacting with the recording regions. The intensity of reading radiation reaches its maximum at the focus of the lens **8**. Consequently, the detected fluorescent signal reaches its maximum value when the focal plane substantially coincides with the fluorescent regions containing layer. As shown, locations **A** and **B** are aligned along the optical axis **OA** of the lens **8** being, respectively, below and above the addressed information layer **L**_{**2**}**.** If the reading beam **B**_{**r**} is focused onto either of the locations **A** or **B**, the detected fluorescent signal will be less than the maximum value. The reduction of the detected signal during the movement of the lens **8** towards the surface of the carrier **2** indicates that the information layer is located between the lens **8** and its focal plane. This is immediately detected by the electronic unit **12**, and subsequently the position of the lens **8** is adjusted accordingly, so as to locate the desired information layer in the focus of the lens. Such a multi-layer information carrier **2** has the layers' addressed information written in the information layers. Reading of a specific layer provides information about the layer number. This information is used for moving the lens 8 in the direction of the desired layer. It should be noted, although not specifically shown, that in a reading system, various elements can be used to provide the above described focus-error corrections. For example, holographic optics can combine most of the above optical functions, e.g. lenses, beam splitter.

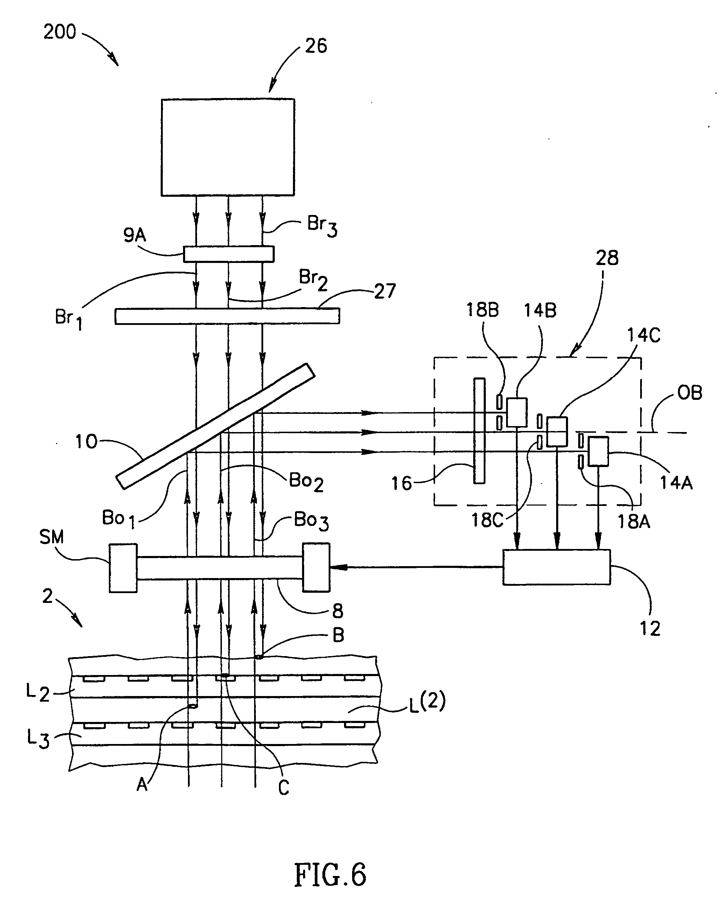

Reference is made to Fig. 6, illustrating yet another example of a focus error correction apparatus, generally designated **200**, associated with the information carrier **2**. An illumination unit **26** is designed so as to generate three separate beams of reading radiation, generally at **Br**_{**1**}**, Br**_{**2**} and **Br**_{**3**}**.** To this end, although being not specifically illustrated, the illumination unit **26** may comprise three light sources for emitting three separate beams, or a single light source and suitable beam splitting means. A holographic plate **27** is located in the optical path of the incident beams **Br**_{**1**}**, Br**_{**2**} and **Br**_{**3**} so as to focus the beams onto different locations **A, B** and **C**, which are aligned along the optical axis **OA** of the lens **8** below, above and in the information layer **L**_{**2**}**,** respectively. A detection unit **28** of the apparatus **200,** in distinction to that of the apparatus **1**, comprises three separate detectors **14a, 14b** and **14c** provided with apertures **18a, 18b** and **18c**, respectively.

The interaction of the incident beams **Br**_{**1**}**, Br**_{**2**} and **Br**_{**3**} with the carrier **2** results in the provision of three separate output fluorescent radiation components, **Bo**_{**1**}**, Bo**_{**2**} and **Bo**_{**3**}**,** which are delivered to the detection unit **28.** The dichroic mirror **10** and filter **16** would prevent any non-fluorescent radiation component from reaching the detectors **14a-14c.** The fluorescent radiation reflected from the dichroic mirror **10,** propagates towards the detection unit **28** along an axis **OP.** The detectors **14a-14c** are accommodated in the optical path of the propagation of the fluorescent radiation, and are spaced-apart from each other a corresponding distance (i.e. corresponding to that between the points **A, B** and **C**) along the axis **OP.** Signals detected by the detectors **14a** and **14b** (i.e. associated with the locations **A** and **B**) are equal, being less than that detected by the detector **14c** (i.e. associated with the location **C**). According to the present example of Fig. 6, the separate detectors **14a-14c** carry out the focus-error detection (i.e. out-of-focus position of the location **C**). When the carrier **2** moves up (i.e. closer to the lens **8**), the fluorescent signals coming from the locations **A** and **B** decrease and increase, respectively. The difference has opposite signs when the focal plane of the lens is below and above the desired layer **L**_{**2**}**.** The control unit **12** is responsive to the detected signals for operating the servomechanism **SM** accordingly.

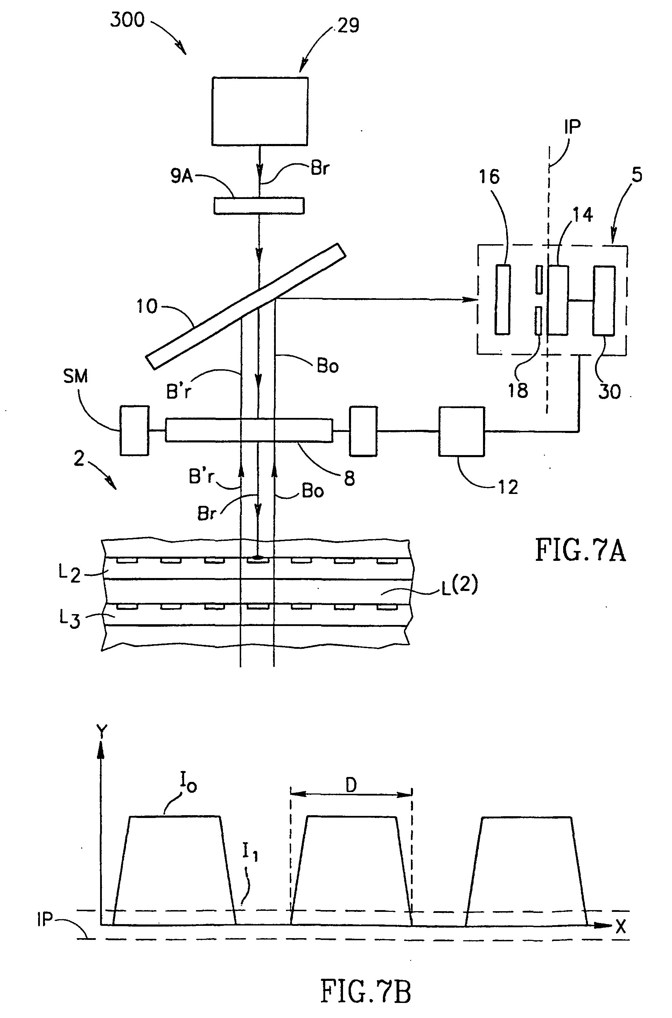

Reference is now made to Figs. 7a and 7b, showing the main principles of a focus error detection technique according to yet another embodiment of the invention. A focus error correction apparatus, generally designated **300**, is generally similar to the apparatus **100**, and the focus error detection technique utilizes the oscillation of the objective lens **8** along its optical axis **OA.** In the apparatus **300,** in distinction to the apparatus **100**, a radiation source **29** generates a non-coherent incident beam **B**_{**r**}**,** and a detection unit comprises modulation-sensitive electronics, generally at **30**, which is coupled to the detector **14** or is integral either with the detector or with the control unit **12.** An illuminated area (not shown) is defined by the spacing between the adjacent information layers and angular field of view (numerical aperture) of the objective lens **8**. To this end, the diameter D of the aperture stop **18** is defined by the dimensions of the recording region **R**_{**f**}**,** such that an imaging spot occupies the entire aperture, and no surrounded regions **R**_{**t**} are projected onto the detector **14.**

Different distributions of the output fluorescent signal **B**_{**o**} in a plane defined by the radiation-sensitive surface **IP** of the detector **18** are shown. Intensity distributions **I**_{**0**} and **I**_{**1**} are associated with the information layers located, respectively, in and out of focus of the lens **8**. The difference in the intensities distribution is caused by the fact that the recording fluorescent regions **R**_{**f**} occupy only a small fraction (about 10-20%) of the information layer. The only light component collected by the diameter **D** of the aperture **18** passes towards the detector **14**. The amount of the fluorescent radiation **B**_{**o**} impinging onto the radiation-sensitive surface of the detector **14** reaches its maximum value when the information layer is located in the focus of the lens **8**. The intensity distribution **I**_{**0**} is transformed into the distribution **I**_{**1**}**,** when the addressed information layer moves out of focus, and, therefore, the detected signal is reduced. This is detected by modulation-sensitive electronics **30**. The fluorescent signal is further reduced with the movement of the addressed layer away from the focal plane. The oscillation of the lens **8** along its optical axis provides variations of the detected signals and, therefore, the position of the desired information layer can be defined for the purpose of focus error corrections.

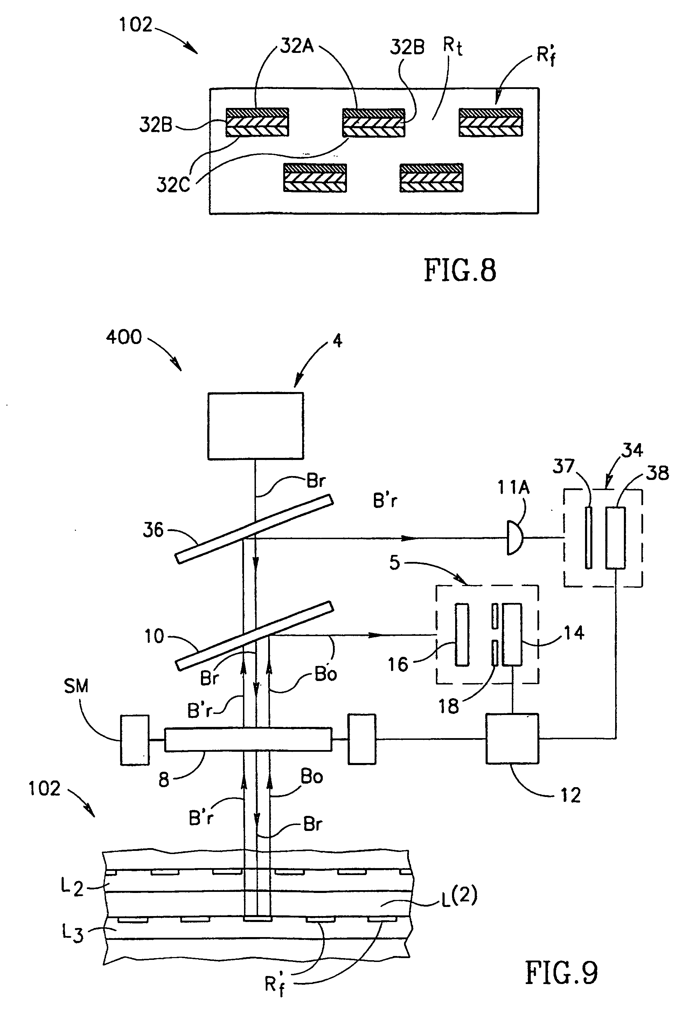

Turning now to Fig. 8, there is illustrated a part of an information carrier, generally designated **102,** having a somewhat different construction in comparison to that of the carrier **2**. Recording regions, generally **R**_{**f**}**',** in distinction to those of the carrier **2**, are in the form of stacks comprising three layers, **32a, 32b** and **32c,** formed of materials having different optical properties. The layers **32a** and **32b** are formed of substantially fluorescent and reflective materials, respectively, with respect to the incident radiation. The layers **32a** and **32b,** when illuminated by appropriate incident radiation, produce excited fluorescent and reflective output radiation, respectively. The layer **32c** is formed of a substantially absorbing material, thereby eliminating an undesirable cross-talk between the adjacent recording regions.

Fig. 9 schematically illustrates a reading apparatus, generally at **400** for reading information stored in the information carrier **102.** Similarly, the same reference numbers identify those components of the apparatus **400,** which are identical with the previously described devices. The apparatus **400** comprises an additional detection unit **34** and a beam splitter **36.** The beam splitter **36** is a partially transparent mirror. The detection unit **34** comprises a suitable optics (not shown), a filter **37** and a detector **38.** The filter **36** allows the passage of the incident radiation spectrum only, and prevents any other radiation component from reaching the detector **48.** According to the present example, a focus error detection technique is based on the use of an astigmatic element **11a.** Alternatively, although not specifically shown, the focus error detection may be carried out in the manner described above with references to either of Figs. 5 or 6.

Reading in the optical memory device **102** is based on the following. The layers **32b** serve as mirrors attached to each fluorescent layer **32a.** Therefore, when the reading radiation **B**_{**r**} impinges onto the recording region **R**_{**f**}**'**, a small component of the reading radiation is reflected from the layer **32b** and propagates up, together with the fluorescent radiation **B**_{**o**} excited in the layer **32a.** The reflected and fluorescent light components **B'**_{**r**} and **B**_{**o**} are collected by the objective lens **8** and, respectively, transmitted and reflected by the dichroic mirror **10.** The reflected fluorescent radiation component **B**_{**o**} propagates towards the detection unit **5.** The transmitted radiation **B'**_{**r**} impinges onto the mirror **36** and, being reflected therefrom, propagates towards the detection unit **34** through the astigmatic element **11a**

The small, reflected light component **B'**_{**r**} forms a concentrated diffraction limited spot, similarly to that in conventional "reflective" optical memory devices. The position of the illuminated spot can be detected and used for focus error correction, when the focus error is more than the track pitch. The focus error correction technique, in distinction to the conventional one, is based on that no reflection of the concentrated light can be observed at small focus error distances. The recording regions are too small to reflect the concentrated light, taking into account that a single region has dimensions below the diffraction limit, as indicated above. Only diffraction and scattering are observed in this situation. Diffracted and scattered light is used for small focus error corrections when the distance between the information layer and the focus of the reading beam is about one micrometer. In this situation, such fluorescent-reflective recording regions **R'**_{**f**} act as a virtual source for the reading purposes. When the focus error distance is close to the dimensions of the recording region, the focus error detection techniques described above with reference to Figs. 1, 5 and 6 can be employed for reading the information from the device **102.**

Those skilled in the art will readily appreciate that various modifications and changes may be applied to the preferred embodiment of the invention as hereinbefore exemplified without departing from its scope defined in and by the appended claims.

## Claims

1. A focus error correction apparatus for use in a pickup system for reading data in a multilayer information carrier (2), in which information layers are arranged in a spaced-apart relationship and each information layer is formed with a plurality of spaced-apart data regions (Rf, R'f), each surrounded by surrounding regions, wherein the data regions are made of a fluorescent material capable of generating an output excited radiation, when interacting with a predetermined incident exciting radiation, and the surrounding regions are substantially optically transparent with respect to the incident and output radiation, the apparatus comprising:
(a) an illumination unit (4) generating said predetermined incident radiation which is directed towards the carrier for producing the excited output radiation;
(b) a detection unit (5) for receiving radiation and generating data representative thereof and comprising at least one detector for receiving the output radiation;
(c) a focusing optics (8) for directing the incident radiation towards an addressed plane inside the carrier and collecting radiation returned from illuminated regions in the carrier;
(d) an actuator (SM) providing a relative displacement between the information carrier and the focusing optics along an optical axis thereof;
(e) a frequency filter assembly (10) accommodated in the optical path of the incident radiation propagating towards the carrier and the radiation returned from the illuminated regions in the carrier and operating to spatially separate between the spectra of the incident radiation and the excited output radiation and pick up said output radiation to be received by the detection unit; and
(f) a control unit (12) responsive to the data generated by the detection unit and analyzing said data to determine the relative position of the addressed plane, and selectively generate a focus error correction signal to operate the actuator accordingly, the actuator further
comprising an optical arrangement defining at least two spaced-apart focal planes, which are aligned in a preset relationship with said focal plane of the focusing optics and in a preset relation with a layers' arrangement of the information carrier, such that when the focal plane of the focusing optics coincides with the fluorescent material containing layer, said at least two focal planes are located outside any fluorescent material containing layer of the structure, said data generated by the detection unit being thereby indicative of the relative location of the addressed plane relative to the focal plane of the focusing optics; and
the control unit (12) using the detection information generated by the detection unit when the focusing optics is focused on said two spaced apart focal planes to locate the desired information layer in the focus plane of the focusing optics and operating said actuator to provide said relative displacement to vary a location of a focusing plane of the focusing optics from layer to layer inside the carrier.

2. The apparatus according to claim 1, wherein the filter assembly comprises a spectral filter (16) allowing the passage of the output radiation to the detector and preventing any other radiation spectrum from reaching the detector.

3. The apparatus according to claim 1, wherein the filter assembly comprises a beam splitter (10) for spatially separating the incident and output radiation spectrums and directing said output radiation to the detection unit.

4. The apparatus accordingly to claim 1, wherein said arrangement defining the at least two focal planes comprises an astigmatic element (11) accommodated in the optical path of the separated output radiation.

5. The apparatus according to claim 1, wherein
- said arrangement defining the at least two focal planes comprises an optical assembly for splitting the incident radiation into at least three spatially separated beams and focusing one of them onto said focal plane of the focusing optics and the at least two other beams on said at least two focal planes;
- said at least two focal planes are located below said focal plane of the focusing optics inside the carrier;
- said output radiation is composed of at least three spatially separated components; and
- said detection unit comprises three separate detectors (14A, 14B, 14C), each for receiving a corresponding one of the output radiation components, the detectors being spaced from each other a certain predetermined distance along an axis of propagation of the output radiation towards the detection unit.

6. The apparatus according to claim 5, wherein said optical assembly comprises a holographic plate (27) accommodated in the optical path of the incident radiation upstream of the focusing optics.

7. The apparatus according to claim 1, wherein said arrangement defining the at least two focal planes comprises a driver (24) associated with the focusing optics for providing continuous oscillation thereof along its optical axis.

8. The apparatus according to claim 7, wherein said detection unit comprises an aperture (18) accommodated in front of the radiation-sensitive surface, the diameter of the aperture being substantially equal to the dimensions of the recording region.

9. The apparatus according to claim 7, and also comprising a modulation-sensitive electronics.

10. The apparatus according to claim 1, wherein said beam splitting assembly comprises a dichroic mirror (10).

11. The apparatus according to claim 1, wherein
- each of said recording regions comprises a material (32B) substantially reflective with respect to said incident radiation, the reflective material being located underneath said fluorescent material (32A), so as to produce a reflected light component coming out of the information carrier,
- said detection unit comprises a first detector (14), defining said radiation-sensitive surface, and a second detector (38), the first and second detectors receiving, respectively, said output fluorescent radiation and said reflected radiation;
- said beam splitting assembly comprises a dichroic mirror (10) for separating said fluorescent radiation and directing it onto the first detector (14), and a partially transparent mirror (36) for separating said reflected radiation and directing it onto the second detector (38).

12. The apparatus according to claim 11, wherein said control unit (18) is coupled to the second detector (38).

13. The apparatus according to claim 12, wherein said first detector (14) receives the fluorescent radiation and generates data representative of the information stored in the information carrier.

14. The apparatus according to claim 11, wherein the recording region also comprises a substantially absorbing material (32C) located underneath the reflective material.

## Patentansprüche

1. Fokusfehler-Korrekturvorrichtung zur Verwendung in einem Aufnahmesystem zum Lesen von Daten in einem mehrschichtigen Informationsträger (2), in welchem Informationsschichten in einer beabstandeten Beziehung angeordnet sind und jede Informationsschicht mit einer Mehrzahl von beabstandeten Datenbereichen (Rt, Rf) ausgebildet ist, von denen jeder von Umgebungsbereichen umgeben ist, wobei die Datenbereiche aus einem fluoreszierenden Material bestehen, das im Stande ist, eine ausgegebene erregte Strahlung zu erzeugen, wenn es mit einer vorbestimmten einfallenden erregenden Strahlung wechselwirkt, und die Umgebungsbereiche bezüglich der einfallenden und ausgegebenen Strahlung im Wesentlich optisch transparent sind, wobei die Vorrichtung aufweist:
(a) eine Beleuchtungseinheit (4), die die vorbestimmte einfallende Strahlung erzeugt, welche zum Erzeugen der erregten ausgegebenen Strahlung zu dem Träger gerichtet ist;
(b) eine Erfassungseinheit (5) zum Empfangen einer Strahlung und zum Erzeugen von diese darstellenden Daten und die mindestens eine Erfassungseinrichtung zum Empfangen der ausgegebenen Strahlung aufweist,
(c) eine Fokussierungsoptik (8) zum Richten der einfallenden Strahlung zu einer behandelten Ebene innerhalb des Trägers und zum Sammeln einer von den beleuchteten Bereichen in dem Träger zurückgeführten Strahlung;
(d) ein Betätigungsglied (SM), das eine relative Verschiebung zwischen dem Informationsträger und der Fokussierungsoptik entlang einer optischen Achse davon vorsieht;
(e) einen Frequenzfilteraufbau (10), der in dem optischen Pfad der einfallenden Strahlung, die sich zu dem Träger ausbreitet, und der Strahlung untergebracht ist, die von den beleuchteten Bereichen in dem Träger zurückgeführt wird, und arbeitet, um zwischen dem Spektrum der einfallenden Strahlung und der erregten ausgegebenen Strahlung räumlich zu trennen und die ausgegebene Strahlung aufzunehmen, die von der Erfassungseinheit zu empfangen ist; und
(f) eine Steuereinheit (12), die auf die von der Erfassungseinheit erzeugten Daten reagiert und die Daten analysiert, um die relative Position der behandelten Ebene zu bestimmen und selektiv ein Fokusfehler-Korrektursignal zu erzeugen, um das Betätigungsglied demgemäß zu betreiben, wobei das Betätigungsglied weiterhin eine optische Anordnung aufweist, die mindestens zwei beabstandete Brennebenen definiert, welche derart in einer vorbestimmten Beziehung zu der Brennebene der Fokussierungsoptik und in einer im Voraus eingestellten Beziehung zu einer Schichtenanordnung des Informationsträgers ausgerichtet sind, dass dann, wenn die Brennebene der Fokussierungsoptik mit der fluoreszierendes Material enthaltenden Schicht übereinstimmt, die mindestens zwei Brennebenen außerhalb irgendeines fluoreszierenden Materials angeordnet sind, das eine Schicht der Struktur enthält, wobei Daten, die von der Erfassungseinheit erzeugt werden, dadurch für die relative Lage der behandelten Ebene relativ zu der Brennebene der Fokussierungsoptik anzeigend sind; und
wobei die Steuereinheit (12) die Erfassungsinformation verwendet, die von der Erfassungseinheit erzeugt wird, wenn die Fokussierungsoptik auf die zwei beabstandeten Brennebenen fokussiert ist, um die erwünschte Informationsschicht in der Brennebene der Fokussierungsoptik zu lokalisieren, und das Betätigungsglied betreibt, um die relative Verschiebung vorzusehen, um eine Lage einer Fokussierungsebene der Fokussierungsoptik von Schicht zu Schicht innerhalb des Trägers zu ändern.

2. Vorrichtung nach Anspruch 1, wobei der Filteraufbau ein Spektralfilter (16) aufweist, das den Durchgang der ausgegebenen Strahlung zu der Erfassungseinheit zuläßt und irgendein anderes Strahlungsspektrum daran hindert, die Erfassungseinheit zu erreichen.

3. Vorrichtung nach Anspruch 1, wobei der Frequenzfilteraufbau einen Strahlenteiler (10) zum räumlichen Trennen der einfallenden und ausgegebenen Strahlungsspektra aufweist und die ausgegebene Strahlung zu der Erfassungseinheit richtet.

4. Vorrichtung nach Anspruch 1, wobei die Anordnung, die die mindestens zwei Brennebenen definiert, ein astigmatisches Element (11) aufweist, das in dem optischen Pfad der getrennten ausgegebenen Strahlung untergebracht ist.

5. Vorrichtung nach Anspruch 1, wobei
- die Anordnung, die die mindestens zwei Brennebenen definiert, einen optischen Aufbau zum Teilen der einfallenden Strahlung in mindestens drei räumlich getrennte Strahlen und Fokussieren von einem von diesen auf die Brennebene der Fokussierungsoptik und der mindestens zwei anderen Strahlen auf die mindestens zwei Brennebenen aufweist;
- die mindestens zwei Brennebenen unter der Brennebene der Fokussierungsoptik innerhalb des Trägers angeordnet sind;
- die ausgegebene Strahlung aus mindestens drei räumlich getrennten Komponenten besteht; und
- die Erfassungseinheit drei getrennte Detektoren (14A, 14B, 14C) aufweist, von denen jeder zum Empfangen einer entsprechenden der ausgegebenen Strahlungskomponenten vorgesehen ist, wobei die Detektoren einen bestimmten vorbestimmten Abstand entlang einer Ausbreitungsachse der ausgegebenen Strahlung zu der Erfassungseinheit hin beabstandet sind.

6. Vorrichtung nach Anspruch 5, wobei die optische Anordnung eine holografische Platte (27) aufweist, die in dem optischen Pfad der einfallenden Strahlung der Fokussierungsoptik vorgeschaltet untergebracht ist.

7. Vorrichtung nach Anspruch 1, wobei die Anordnung, die die mindestens zwei Brennebenen definiert, eine der Fokussierungsoptik zugeordnete Ansteuereinrichtung (24) zum Liefern einer kontinuierlichen Oszillation von dieser entlang ihrer optischen Achse aufweist.

8. Vorrichtung nach Anspruch 7, wobei die Erfassungseinheit eine Öffnung (18) aufweist, die vor der strahlungsempfindlichen Oberfläche untergebracht ist, wobei der Durchmesser der Öffnung im Wesentlichen gleich zu den Abmessungen des Aufzeichnungsbereichs ist.

9. Vorrichtung nach Anspruch 7 und ebenso eine modulationsempfindliche Elektronik aufweisend.

10. Vorrichtung nach Anspruch 1, wobei die Strahlenteilungsanordnung einen dichromatischen Spiegel (10) aufweist.

11. Vorrichtung nach Anspruch 1, wobei
- jeder der Aufzeichnungsbereiche ein Material (32B) aufweist, das im Wesentlichen bezüglich der einfallenden Strahlung reflektierend ist, wobei das reflektierende Material unter dem fluoreszierendem Material (32A) angeordnet ist, um eine reflektierte Lichtkomponente zu erzeugen, die aus dem Informationsträger kommt;
- die Erfassungseinheit einen ersten Detektor (14), der die strahlungsempfindliche Oberfläche definiert, und einen zweiten Detektor (38) aufweist, wobei die ersten und zweiten Detektoren die fluoreszierende bzw. die empfangene Strahlung empfangen;
- die Strahlenteilungsanordnung einen dichromatischen Spiegel (10) zum Trennen der fluoreszierenden Strahlung und zum Richten von dieser auf den ersten Detektor (14) und einen teilweise transparenten Spiegel (36) zum Trennen der reflektierten Strahlung und zum Richten von dieser auf den zweiten Reflektor (38) aufweist.

12. Vorrichtung nach Anspruch 11, wobei die Steuereinheit (18) mit dem zweiten Detektor (38) gekoppelt ist.

13. Vorrichtung nach Anspruch 12, wobei der erste Detektor (14) die fluoreszierende Strahlung empfängt und Daten erzeugt, die die Information darstellen, die in dem Informationsträger gespeichert ist.

14. Vorrichtung nach Anspruch 11, wobei der Aufzeichnungsbereich ebenso ein im Wesentlichen absorbierendes Material (32C) aufweist, das unter dem reflektierenden Material angeordnet ist.

## Revendications

1. Appareil de correction d'erreur de mise au point destiné à être utilisé dans un système de captage pour lire des données dans un support d'information multicouche (2), dans lequel des couches d'information sont disposées en une relation espacée et chaque couche d'information est formée avec une pluralité de régions de données espacées (Rf, R'f), chacune entourée par des régions environnantes, dans lequel les régions de données sont réalisées en une matière fluorescente capable de générer un rayonnement excité de sortie en cas d'interaction avec un rayonnement d'excitation incident prédéterminé, et les régions environnantes sont sensiblement optiquement transparentes par rapport au rayonnement de sortie et incident, l'appareil comprenant :
(a) un bloc d'éclairement lumineux (4) générant ledit rayonnement incident prédéterminé qui est dirigé vers le support pour produire le rayonnement de sortie excité ;
(b) un bloc de détection (5) pour recevoir un rayonnement et générer des données représentatives de celui-ci et comprenant au moins un détecteur pour recevoir le rayonnement de sortie,
(c) un appareil optique de mise au point (8) pour diriger le rayonnement incident vers un plan adressé à l'intérieur du support et capter le rayonnement renvoyé depuis les régions éclairées dans le support ;
(d) un vérin (SM) assurant un déplacement relatif entre le support d'information et l'appareil optique de mise au point suivant un axe optique de celui-ci;
(e) un filtre de fréquences (10) logé sur le chemin optique du rayonnement incident se propageant vers le support et le rayonnement renvoyé depuis les régions éclairées dans le support et opérant une séparation spatiale entre les spectres du rayonnement incident et du rayonnement de sortie excité, et un captage dudit rayonnement de sortie devant être reçu par le bloc de détection ; et
(f) une unité de commande (12) réagissant aux données générées par le bloc de détection et analysant lesdites données pour déterminer la position relative du plan adressé, et générer sélectivement un signal de correction d'erreur de mise au point pour actionner le vérin en conséquence, le vérin comprenant en outre un arrangement optique définissant au moins deux plans focaux espacés, qui sont alignés dans une relation prédéfinie avec ledit plan focal de l'appareil optique de mise au point et dans une relation prédéfinie avec une disposition en couches du support d'information, de telle sorte que, lorsque le plan focal de l'appareil optique de mise au point coïncide avec la couche contenant la matière fluorescente, lesdits au moins deux plans focaux sont situés à l'extérieur de toute couche contenant la matière fluorescente de la structure, lesdites données générées par le bloc de détection étant ainsi indicatives de l'emplacement relatif du plan adressé par rapport au plan focal de l'appareil optique de mise au point ;
l'unité de commande (2) utilisant les informations de détection générées par le bloc de détection lorsque l'appareil optique de mise au point est mis au point sur lesdits deux plans focaux espacés pour localiser la couche d'information désirée dans le plan focal de l'appareil optique de mise au point, et actionnant ledit vérin pour fournir ledit déplacement relatif pour faire varier un emplacement d'un plan de mise au point de l'appareil optique de mise au point de couche à couche à l'intérieur du support.

2. Appareil selon la revendication 1, dans lequel le filtre comprend un filtre coloré (16) permettant le passage du rayonnement de sortie vers le détecteur et empêchant tout autre spectre du rayonnement d'atteindre le détecteur.

3. Appareil selon la revendication 1, dans lequel le filtre comprend un diviseur de faisceau (10) pour séparer spatialement les spectres du rayonnement incident et de sortie et diriger ledit rayonnement de sortie vers le bloc de détection.

4. Appareil selon la revendication 1, dans lequel ledit arrangement définissant les au moins deux plans focaux comprend un élément astigmatique (11) logé sur le chemin optique du rayonnement de sortie séparé.

5. Appareil selon la revendication 1, dans lequel
- ledit arrangement définissant les au moins deux plans focaux comprend un ensemble optique pour diviser le rayonnement incident en au moins trois faisceaux séparés spatialement et pour mettre au point l'un d'eux sur ledit plan focal de l'appareil optique de mise au point et les au moins deux autres faisceaux sur lesdits au moins deux plans focaux ;
- lesdits au moins deux plans focaux sont situés sous ledit plan focal de l'appareil optique de mise au point à l'intérieur du support ;
- ledit rayonnement de sortie est composé d'au moins trois composantes séparées spatialement ; et
- ledit bloc de détection comprend trois détecteurs séparés (14A, 14B, 14C) recevant une correspondante des composantes du rayonnement de sortie, les détecteurs étant espacés les uns des autres d'une certaine distance prédéterminée suivant un axe de propagation du rayonnement de sortie en direction du bloc de détection.

6. Appareil selon la revendication 5, dans lequel ledit ensemble optique comprend une plaque holographique (27) logée sur le chemin optique du rayonnement incident en amont de l'appareil optique de mise au point.

7. Appareil selon la revendication 1, dans lequel ledit arrangement définissant les au moins deux plans focaux comprend un dispositif d'entraînement (24) associé à l'appareil optique de mise au point pour assurer une oscillation continue de celui-ci suivant son axe optique.

8. Appareil selon la revendication 7, dans lequel ledit bloc de détection comprend une ouverture (18) logée en face de la surface sensible au rayonnement, le diamètre de l'ouverture étant sensiblement égal aux dimensions de la région d'enregistrement.

9. Appareil selon la revendication 7 et comprenant également un appareil électronique sensible à la modulation.

10. Appareil selon la revendication 1, dans lequel ledit ensemble diviseur de faisceau comprend un miroir dichroïque (10).

11. Appareil selon la revendication 1, dans lequel
- chacune desdites régions d'enregistrement comprend une matière (32B) sensiblement réfléchissante vis-à-vis dudit rayonnement incident, la matière réfléchissante étant située sous ladite matière fluorescente (32A), de manière à produire une composante de lumière réfléchie sortant du support d'information ;
- ledit bloc de détection comprend un premier détecteur (14) définissant ladite surface sensible au rayonnement, et un second détecteur (38), les premier et second détecteurs recevant respectivement ledit rayonnement fluorescent de sortie et ledit rayonnement réfléchi ;
- ledit ensemble diviseur de faisceau comprend un miroir dichroïque (10) pour séparer ledit rayonnement fluorescent et le diriger sur le premier détecteur (14), et un miroir partiellement transparent (36) pour séparer ledit rayonnement réfléchi et le diriger sur le second détecteur (38).

12. Appareil selon la revendication 11, dans lequel ladite unité de commande (18) est couplée au second détecteur (38).

13. Appareil selon la revendication 12, dans lequel ledit premier détecteur (14) reçoit le rayonnement fluorescent et génère des données représentatives des informations stockées dans le support d'information.

14. Appareil selon la revendication 11, dans lequel la région d'enregistrement comprend également une matière sensiblement absorbante (32C) située sous la matière réfléchissante.
